# EUROPEAN PATENT APPLICATION

(11) **EP 2 863 279 A1**
(43) Date of publication of application: **22.04.2015**
(21) Application number: 13189465.1
(22) Date of filing: 21.10.2013
(51) Int. Cl.: G05B 19/4069

(54) **Machine arrangement and method for operating a working machine with link between real machine environment to simulated machine environment**

(71) Applicant: ROBERT BOSCH GMBH, 70442 Stuttgart (DE)
(72) Inventor: Schmeits, Cedric, 5462RR Vught (NL)
(74) Representative: Thürer, Andreas

(57) **Abstract**

The invention relates to a machine arrangement (10) comprising a working machine (1) having at least one drive device (2) for moving at least one working element (12) and at least one control device (4) for controlling the at least one drive device (2), the control device (4) com-prising a memory device (6) by which at least one value characteristic for the control of the drive device (2) can be stored. According to the invention the machine arrangement (10) comprises a simulation device (20), which allows a simulation of the working machine (1) or a working mode of the working machine (1), wherein at least in times a communication connection (24) is present which allows the transfer of data from the working machine (1) to the simulation device (20) and wherein the machine arrangement further comprises a switching device (26) which allows the transfer of a data set (DS), which is characteristic for a status of the working machine from the working machine to the simulation device (20).

## Description

The present invention relates to a machine arrangement including a working machine and method for operating and developing a working machine. In the state of the art multiple working machines are known. It is also known that during the development especially the programming of such working machines a simulation environment may be used in which the respective drives of the machine or the like may be programmed or even tested. In many cases it would be helpful to predict, how the machine reacts to certain circumstances.

It is therefore the object of the invention to provide a possibility which facilitates programming, but also maintenance processes to such working machines. This object is solved by the objects of the independent claims. Advantageous embodiments are disclosed in the subclaims.

The machine arrangement according to the invention comprises a working machine having at least one drive device for moving at least one working element and comprises further at least one control device for controlling the at least one drive device. The control device comprises a memory device by which at least one value characteristic for the control and/or the configuration of the drive device can be stored.

According to the invention the machine arrangement comprises a simulation device which allows a simulation of the working machine or a working mode of the working machine, wherein at least in times a communication connection is present which allows the transfer of data from the working machine to the simulation device and the wherein the machine arrangement further comprises a switching device which allows the transfer of a data set which is characteristic for a status of the working machine from the working machine to the simulation device.

It is therefore suggested that an actual status (for example a configuration) of a working machine or data characteristic for the working machine may be transferred to the simulation device. Therefore, in principle for example by actuating a switch, a snap shot of the working machines can be transferred to the simulation environment.

For example by pressing one button a user of the control system or the simulation device can copy all control relevant data from a real machine to the simulation environment and based upon this data continue his programming work.

The invention can be used both during the development and the maintenance of a machine and especially of a machine application program. However, the preferred use is during a development phase. The invention allows the user to create and test application software without using an actual machine (and especially without the machine being running and/or in a work mode). Therefore it is possible that a user starts a developing and testing program and also mechanics in parallel, instead of one after the other. Also, a user can extensively test an application program, i.e. an application software, without the need for mechanics and also without the risk of damaging any mechanics. In case of a fault or a bug in the application software to be encountered, a user can try to reproduce the application program and debug it from his desk or in the simulation environment and does not directly have to apply the application to the machine itself. This machine may be located at a different place and practically anywhere in the world and may also possibly be arranged in a clean room which is not accessible for the user.

Preferably the working machine comprises several drive devices, wherein preferably at least one of those drives is controlled in dependence of another drive. Also the machine may comprise two or more devices which can be controlled independently from one another. Preferably the working machine is integrated into a communication network having a plurality of nodes. Also the data characteristic for these nodes may be read out.

Preferably the working machine is remote from the simulation device. A switching device is understood to mean any device which may be acted upon by a user and which can change at least one status. Example for such switching devices may be buttons, for example buttons on a keyboard.

In a preferred embodiment the drive device causes an at least partially and/or at least temporarily linear movement of the working element, a rotatory movement of the working element or a combination of theses movements. This means that the machine is preferable a motion system.

The invention further more makes it easier for a user to ensure that the simulation environment mimics or characterizes the real environment as closely as possible. The invention allows for taking a snap shot of the real machine's configuration and preferably of the real machine's full configuration and therefore based on this snap shot the working in the simulation environment may be continued. The simulation environment may comprise a processing device as a computer and also preferably comprises a display device on which at least characteristic data for the real working machine may be displayed.

The invention may be especially used in the use of the machine, especially where it is helpful to create a very similar environment especially for debugging purposes. But also during the development and any change on the real machine the invention may help, since these changes of the machine also mean a modification in a simulation environment as well. Also in this case by a simple actuation of a switch the configuration may be transferred to the simulation device or the simulation environment.

Preferably the actuation of the switching device does not allow for a simulation of the dynamics of the system. Due to inertia and disturbances a difference between the set-point (sollwert) and an actual position (ist-wert) arises and therefore the control algorithms try to minimize that by calculating required currents and voltages for the motors. In the simulation environment there are, however, no dynamics and therefore the position error is 0 and therefore no voltages or currents are produced.

It would be possible that the working machine comprises a detection device which detects at least one value which is characteristic for a drive device. For example the machine may comprise sensors for detecting a position of the working element. However, the data of those detection devices are not necessarily and preferably not used or transferred to the simulation device. Preferably, data set which is transferred is at least partially the configuration data and preferably completely the configuration data of the machine. So for example a working machine may be equipped with motion controllers and therefore also a network of motion nodes

is present. Each of these nodes contains preferably a motion controller card and preferably one or more drive cards. These drive cards in turn may control one or more drives or axes and therefore form the control device. Therefore, also drives with different operation principles may be controlled as for example one-phase DC motors, two-phase Stepper motors, three-phase AC motors, high-voltage Piezo actuators and the like. These drive devices again, typically - but optionally - use position sensors for a closed loop control. Furthermore, additional configuration parameters and tuning parameters are used to describe the behavior of an axis.

All of these settings and parameters may be advantageously retrieved from a real system. Preferably these settings and parameters which form the data set may be stored in a memory device. Preferable these data are stored in a hierarchical structure which most preferably may use XML-files which again can be used in the simulation environment i.e. the simulation device. This is advantageous, because node parameters, as for example sample-frequency, number of axes, axes names and the like and also the axis parameters (which describe the motor type, controller gains, error handling settings and the like) may already be available in XML-files especially for initializing the systems.

However, other settings like the network topology are usually not available in XML-files. These settings are usually given by the network itself and therefore preferably need to be extracted and stored in order to be used in a simulation. Preferably, the invention always uses the configuration-data which have been extracted from the system. Preferably the control data or the data set does not contain momentary values for example positions, voltages or currents, but especially static parameter values which describe the system setup. A copying of these static parameters allows the creation of an equivalent simulation environment. Preferably also data characteristic of nodes are transferred.

In a preferred embodiment the status of the working machine is taken at a predetermined point in time, especially at the time when the switching device has been actuated. However, since the data set contains preferably static data, these data are preferably not time dependent.

However, preferably the data set completely describes the status of the working machine and preferably completely describes the status of the working machine at a predetermined point in time.

However, since the data are static, the working machine does not need to be in a working mode, i.e. does not need to run. However, preferably the data are taken from a machine that is at least partially and preferably fully connected which means that at least a part of the nodes and preferably all nodes are visible in the network.

Also the machine is preferably fully initialized which means that preferably that all nodes and axes are parameterized. In a further embodiment of the invention the simulation device comprises a memory device which allows the storage of the data set. Preferably the data set can be retrieved without the use of sensor elements. For example it is possible that the data and especially the configuration settings are retrieved by a program and other software.

In another preferred embodiment also data can be retrieved which are dynamic data. Insofar it would be possible for example to read out sensing devices or the like to retrieve data which are characteristic for a temporal involvement of a value for example the change of a position of a working element in time. The retrievement of such data would also allow the simulation of a dynamic behavior of the machine. In this case for example a system identification technology may be used. This might be especially advantageous for a controller tuning.

In another preferred embodiment both a static simulation and a dynamic simulation can be performed. This would allow a user to analyze and predict values like for example voltages, currents and the like. In this case also the accuracy of the machine and especially the machine under closed loop control may be simulated.

In another preferred embodiment also copying of data from the simulation device to the working machine is possible. For example it would be possible that configuration data of axes and nodes or the like are created or modified in a simulation device. These settings may be stored (for example in XML-files) which may be used to initialize the real machine.

The present invention is also directed to a method for operating a working machine, wherein the working machine has at least one drive device for moving at least one working element and at least one control device for controlling the at least one-drive device. Furthermore, the control device comprises a memory device, by which at least one value characteristic for the control of the drive device can be stored.

According to the invention the machine arrangement comprises a simulation device which allows a simulation of the working machine or a working mode of the working machine, wherein at least in times a communication connection is present which allows the transfer of data from the working machine to the simulation device and wherein upon an actuation of a switching device a data set which is characteristic for a status of the working machine is transferred from the working machine to the simulation device.

Therefore, it is also described for the method that preferably upon a user interaction a data set especially the configuration data are copied from the working machine to a simulation device.

In a method according to the invention a snapshot of all data of the data set is taken at a predetermined point of time and transferred to the simulation device. Preferably the data set is copied to a memory device of the simulation device. Especially this data set is stored in this memory device. Preferably the data are static, i.e. time independent data.

In a further embodiment of the invention the simulation device runs a simulation of the working machine based on a data set transferred from the working machine. In a preferred embodiment it is also possible that together with the data set a value characteristic for a point in time is transferred. Also other values characteristic for the machines may be transferred.

In another preferred embodiment also data characteristic for a working mode of a working machine are transferred and/or displayed on a display device of the simulation device.

Preferably the method is characterized by the following steps:

Upon actuation of the switching device a topology from the network is read.

Afterwards for each node of the network data concerning a motion controller are read out.

Also other configuration parameters are read out.

Furthermore, especially for each axis in the system all configuration parameters are read out and stored.

After the data are transferred, preferably a simulation mode may start up with the same configuration as the real machine. The simulation mode then allows the user to run a machine application. Preferably the simulation mode generates the appropriate events and preferably calculates the correct set-point data (ist-werte) and the like. Preferably the simulation device responds to all software function calls just like in the real environment.

In order to simulate physical inputs (for example additional sensors or analog or digital inputs), the simulation device preferably provides specific function calls and tooling. This allows a user to also test the application's response to fault conditions that are difficult and/or unwanted to test the real environment like for example broken sensor cables or short-circuits.

In a further preferred embodiment the calculation of the environment is performed in real time. However, especially for very large networks it might be possible that not every sample is calculated at its correct sample-frequency, as this also depends on the computing power of the simulation PC. For smaller networks a special movement, for example of one second, would take one second to simulate. In any case it can be assured that the movement may be calculated using the same number of samples as in a real system. Preferably, all motions arising in the system are calculated in a correct number of samples.. Whether the simulation PC can calculate these samples within the correct sample-time depends on the processing power and the network size.

In another preferred embodiment in a simulation mode or a simulation device may evaluate a user's application flow in normal and under abnormal circumstances, especially based on the configuration settings of the real machine.

Preferably also a dynamic simulation is added. In this case preferably the simulation may evaluate motion performance (for example for tracking accuracy, overshoot or settling time).

Preferably the working machine is a working machine which uses motion controls and drive products in the field of semi-conductor, flat-panel-display and solar-industry applications. Therefore the machine is used for movements with a micrometer or even nanometer accuracy.

In another preferred embodiment the simulation device comprises simulated nodes, for example on a computer that may be analyzed with tools known from the state of the art. Such tools may be a configurator, a tuner and a scope. Furthermore, a visualization tooling may be provided which may run both in a real mode or a simulation mode

Other embodiments and advantages will be aperient from the following figurative description. Therein show:
- Fig. 1: a schematic illustration of an arrangement according to the invention; and
- Fig. 2: a flow chart for a method according to the invention.

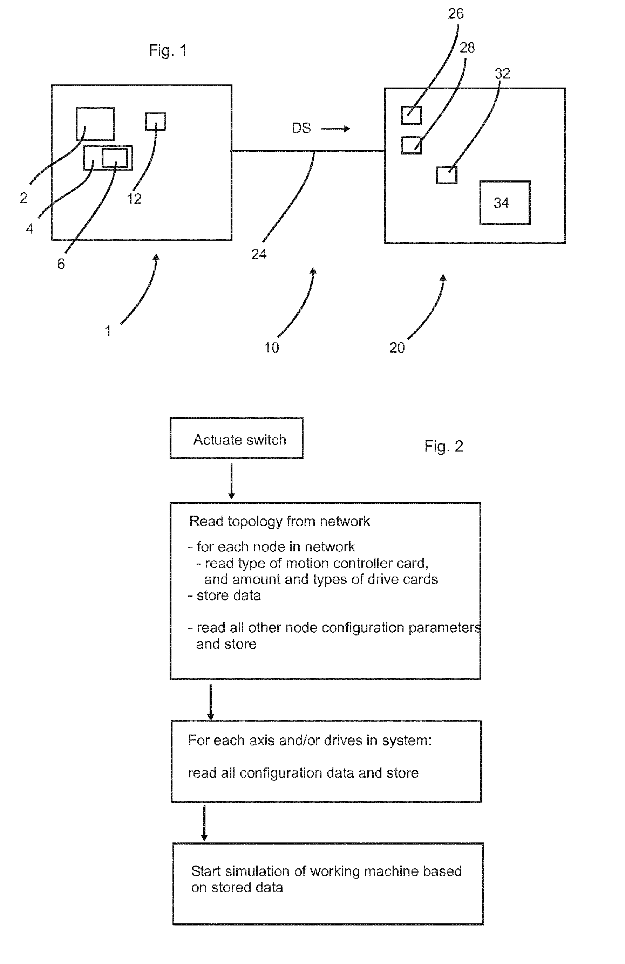

Figure 1 shows a schematic view of an arrangement 10 according to the invention. This arrangement 10 comprises a working machine 1 which is a motion system, for example a linear motion system. Furthermore, the arrangement comprises a simulation device 20 which may also be remote from the working machine. Reference symbol 24 refers to a connection which might be an electrical connection but which might also be a wireless connection. Also this connection 24 may be built up via the internet.

The working machine 1 comprises at least one drive device 2 which serves to move a working element 12 in a linear direction. Reference numeral 4 refers to a control device for controlling the drive 2. Reference numeral 6 refers to a memory device in which data characteristic for the control device 4 are stored or may be stored.

The simulation device 20 comprises also a memory device 28 in which the characteristic data for the working machine, for example the configuration data, may be stored. Reference numeral 26 refers to a switching device which may be acted upon by the user to transfer relevant data from the working machine 1 to the simulation device 20.

Upon actuation of the switching device 26 a set of data and especially configuration data are transferred from the working machine via the connection 24 to the memory 28. Reference numeral 32 shows a display device by which a user may visualize the programming or the data set transferred. Reference numeral 34 comprises an input device by which the user may input data or orders to the simulation device 20. Reference numeral DS means the data set.

Figure 2 shows a flow chart for a method according to the invention. The switch 26 is actuated by a user. After the switch is actuated, the topology is read from the network, i.e. the network of the working machine is read out. Into detail, for example each type of a motion controller card of the working system is read out and also it is read out the amount and type of the different drive cards. These data are stored in the memory device 6 and/or the memory device 28.

At a next step for each axis and/or drive in the system all configuration data are read out and also stored, i.e. saved in the memory device 28 and/or the memory device 6. Finally, a simulation may be started based on the data read out and stored in the memory device 28. At this point, the connection between the working machine and the simulation device 20 may be cut.

### List of references

- DS: data set
- 1: working machine
- 2: drive device
- 4: control device
- 6: memory device
- 10: arrangement
- 12: working element
- 20: simulation device
- 24: connection/communication connection
- 26: switching device
- 28: memory/memory device
- 32: display device
- 34: input device

## Claims

1. Machine arrangement (10) comprising a working machine (1) having at least one drive device (2) for moving at least one working element (12) and at least one control device (4) for controlling the at least one drive device (2), the control device (4) com-prising a memory device (6) by which at least one value characteristic for the control of the drive device (2) can be stored,
**characterised in that**
the machine arrangement (10) comprises a simulation device (20), which allows a simulation of the working machine (1) or a working mode of the working machine (1), wherein at least in times a communication connection (24) is present which allows the transfer of data from the working machine (1) to the simulation device (20) and wherein the machine arrangement further comprises a switching device (26) which allows the transfer of a data set (DS), which is characteristic for a status of the working machine, from the working machine to the simulation device.

2. Machine arrangement according to claim 1,
**characterized in that**
the drive device (2) causes a movement of the working element (12).

3. Machine arrangement according to at least one of the preceding claims,
**characterized in that**
the status of the working machine (1) is a status taken at a predetermined point in time.

4. Machine arrangement according to at least one of the preceding claims,
**characterized in that**
the data set (DS) completely describes the status of the working machine.

5. Machine arrangement according to at least one of the preceding claims,
**characterized in that**
the simulation device (20) comprises a display device (32) which displays a status of the working machine (1).

6. Machine arrangement according to at least one of the preceding claims,
**characterized in that**
the simulation device (20) comprises a memory device (28) which allows the storage of the data set.

7. Method for operating a working machine, the working machine (1) having at least one drive device (2) for moving at least one working element (12) and at least one control device (4) for controlling the at least one drive device (2), the control device (4) comprising a memory device (6) by which at least one value characteristic for the control of the drive device (2) can be stored,
**characterized in that**
the machine arrangement (10) comprises a simulation device (20), which allows a simulation of the working machine (1) or a working mode of the working machine (1), wherein at least in times a communication connection (24) is present which allows the transfer of data from the working machine (1) to the simulation device (20), and wherein upon an actuation of a switching device a data set (DS), which is characteristic for a status of the working machine, is transferred from the working machine (1) to the simulation device (20).

8. Method according to claim 7,
**characterized in that**
a snapshot of all data of the data set (DS) is taken at a predetermined point of time and transferred to the simulation device (20).

9. Method according to claim 7,
**characterized in that**
the simulation device runs a simulation of the working machine based on the data set (DS) transferred from the working machine (1).

10. Method according to claim 7,
**characterized in that**
together with the data set (DS) a value characteristic for a point in time is transferred.

11. Method according to at least one of the preceding claims,
**characterized in that**
data characteristic for a working mode of the working machine are displayed on a display device of the simulation device.

12. Method according to at least one of the preceding claims,
**characterized in that**
the data set contains static data and preferably only contains static data.
